# EUROPEAN PATENT APPLICATION

(11) **EP 4 797 131 A1**
(43) Date of publication of application: **26.08.2026**
(21) Application number: 24896021.3
(22) Date of filing: 10.10.2024
(51) Int. Cl.: G06F 21/56

(54) **DATA ACCESS METHOD, SOC AND DEVICE**

(30) Priority: 28.11.2023 CN 202311623719
(71) Applicant: HUAWEI TECHNOLOGIES CO., LTD., Shenzhen 518129 (CN)
(72) Inventor: XU, Wei, Shenzhen, Guangdong 518129 (CN); SONG, Dongkuang, Shenzhen, Guangdong 518129 (CN); ZHANG, Jing, Shenzhen, Guangdong 518129 (CN)
(74) Representative: MERH-IP Matias Erny Reichl Hoffmann Patentanwälte PartG mbB
(86) International application number: PCT/CN2024/123910
(87) International publication number: WO 2025/112927

(57) **Abstract**

This disclosure provides a data access method, an SoC, and a device. The method is applied to the SoC, where the SoC includes a flash controller and a plurality of processing cores, and a flash memory controlled by the flash controller includes a plurality of storage areas. The method includes: The flash controller receives an access request from a target processing core; obtains access information corresponding to the access request, where the access information includes at least one of indication information of the target processing core or an access occasion; determines a target storage area **in** which an access address corresponding to the access request is located **in** the flash memory; obtains a target access condition corresponding to the target storage area; and executes the access request when the access information satisfies the target access condition. According to this disclosure, system firmware stored in the flash memory can be effectively protected from being attacked by a malicious program.

## Description

This disclosure claims priority to Chinese Patent Application No. 202311623719.6, filed on November 28, 2023 and entitled "DATA ACCESS METHOD, SOC, AND DEVICE", which is incorporated herein by reference in its entirety.

### TECHNICAL FIELD

This disclosure relates to the field of flash storage technologies, and in particular, to a data access method, an SoC, and a device.

### BACKGROUND

System firmware is usually stored in a flash memory (flash memory). The system firmware is a program that is first executed after a device is powered on, and is loaded and run before an operating system (Operating System, OS). If the system firmware is attacked by a malicious program, problems such as a failure to normally start the operating system may be caused. Because the system firmware plays a very important role in the device, how to protect the system firmware stored in the flash memory from being attacked by the malicious program becomes a problem that urgently needs to be resolved currently.

### SUMMARY

This disclosure provides a data access method, an SoC, and a device, to protect firmware stored in a flash memory from being attacked by a malicious program. Corresponding technical solutions are described below.

According to a first aspect, a data access method is provided, where the method is applied to an SoC, the SoC includes a flash controller and a plurality of processing cores, a flash memory controlled by the flash controller includes a plurality of storage areas, and the method includes:
the flash controller receives an access request from a target processing core; the flash controller obtains access information corresponding to the access request, where the access information includes at least one of indication information of the target processing core or an access occasion; the flash controller determines a target storage area in which an access address corresponding to the access request is located in the flash memory; the flash controller obtains a target access condition corresponding to the target storage area; and the flash controller executes the access request when the access information satisfies the target access condition.

In the technical solutions provided in this disclosure, the flash memory is divided into the plurality of storage areas, and different storage areas may correspond to different access conditions. At least one of a visitor and an access occasion is restricted based on an access condition, so as to implement differentiated security management on different storage areas. For a storage area that stores system firmware, a processing core that can access the storage area may be restricted by restricting an access condition, so that a malicious program cannot access the storage area, thereby protecting the firmware stored in the flash memory from being attacked by the malicious program.

In a possible implementation, the SoC further includes an address permission register, the address permission register is configured to store an address range of each of the plurality of storage areas, and correspondingly, that the flash controller determines the target storage area in which the access address corresponding to the access request is located in the flash memory may be as follows:
the flash controller reads the address range of each storage area from the address permission register; and determines, based on the address range of each storage area, the target storage area in which the access address corresponding to the access request is located in the flash memory.

In a possible implementation, the address permission register is further configured to store an access condition corresponding to each of the plurality of storage areas, and correspondingly, that the flash controller obtains the target access condition corresponding to the target storage area may be as follows:
the flash controller reads, from the address permission register, the target access condition corresponding to the target storage area.

In a possible implementation, the SoC further includes a multiport arbiter, and the multiport arbiter is separately connected to the flash controller and the plurality of processing cores.

Before the flash controller receives the access request from the target processing core, the method further includes the following step.

The multiport arbiter receives the access request sent by the target processing core, and determines the indication information of the target processing core based on a port that receives the access request. Then, the multiport arbiter sends the access request and the indication information of the target processing core to the flash controller.

In the technical solutions provided in this disclosure, the multiport arbiter allocates, through a port connected to the target processing core, the indication information to the target processing core that sends the access request, where the indication information indicates the target processing core that sends the access request. A method for allocating the indication information is simple and direct, and has higher efficiency.

In a possible implementation, the plurality of storage areas include a first storage area, the first storage area corresponds to a first access condition, and the first access condition includes that the processing core indicated by the indication information in the access information is a security subsystem.

In the technical solutions provided in this disclosure, the first storage area may be a storage area with a highest security level in the plurality of storage areas, and the storage area allows only the security subsystem to access. In this way, security subsystem firmware may be stored in the first storage area.

In a possible implementation, the plurality of storage areas include a second storage area, the second storage area corresponds to a second access condition, and the second access condition includes that the access occasion in the access information is an occasion before an operating system OS is loaded.

In the technical solutions provided in this disclosure, the access condition of the second storage area is that only access before the OS is loaded is allowed, and the malicious program can attack system firmware only during running of the OS. In this way, data stored in the second storage area is secure, and can be prevented from being attacked by the malicious program. A BIOS may be stored in the second storage area.

In a possible implementation, the plurality of storage areas include a third storage area, the third storage area corresponds to a third access condition, and the third access condition includes that the processing core indicated by the indication information in the access information is any one of the security subsystem, a management subsystem, and an application processor in a secure state.

In the technical solutions provided in this disclosure, the access condition of the third storage area is that only a processing core with a high security level, for example, the security subsystem, the management subsystem, or the application processor in the secure state, is allowed to access the third storage area. However, the malicious program can attack the system firmware only through an application processor in an insecure state. In this way, data stored in the third storage area is also secure, and can be prevented from being attacked by the malicious program. Management subsystem firmware may be stored in the third storage area.

In a possible implementation, the plurality of storage areas include a fourth storage area, the fourth storage area corresponds to a fourth access condition, and the fourth access condition includes that the processing core indicated by the indication information in the access information is any one of the plurality of processing cores.

In the technical solutions provided in this disclosure, the third storage area may have a low security level, and may be used to store configuration data of the system firmware. The configuration data may be information that does not affect system running even if the configuration data is attacked.

In a possible implementation, the access request further carries operation type indication information, and before the flash controller obtains the access information corresponding to the access request, the method further includes the following step.

The flash controller determines that an operation type indicated by the operation type indication information is a read operation or a write operation.

In the technical solutions provided in this disclosure, only access requests corresponding to a read operation and a write operation may be restricted.

In a possible implementation, the method further includes the following step.

The flash controller executes the access request when determining that the operation type indicated by the operation type indication information is not the read operation or the write operation.

In the technical solutions provided in this disclosure, for an access request corresponding to an operation other than the read operation and the write operation, an access condition may not be determined, and the access request may be directly executed. For example, operations such as querying a flash memory model, setting a flash memory operation mode, and performing flash memory quality inspection are directly performed. These operations do not read or write the system firmware in the flash memory, that is, do not affect security of the system firmware.

According to a second aspect, an SoC is provided, where the SoC includes a flash controller and a plurality of processing cores, a flash memory controlled by the flash controller includes a plurality of storage areas, and the flash controller is configured to:
receive an access request from a target processing core;
obtain access information corresponding to the access request, where the access information includes at least one of indication information of the target processing core or an access occasion;
determine a target storage area in which an access address corresponding to the access request is located in the flash memory;
obtain a target access condition corresponding to the target storage area; and
execute the access request when the access information satisfies the target access condition.

In a possible implementation, the SoC further includes an address permission register, and the address permission register is configured to store an address range of each of the plurality of storage areas.

The flash controller is configured to: read the address range of each storage area from the address permission register, and determine, based on the address range of each storage area, the target storage area in which the access address corresponding to the access request is located in the flash memory.

In a possible implementation, the address permission register is further configured to store an access condition corresponding to each of the plurality of storage areas.

The flash controller is configured to read, from the address permission register, the target access condition corresponding to the target storage area.

In a possible implementation, the SoC further includes a multiport arbiter, and the multiport arbiter is separately connected to the flash controller and the plurality of processing cores.

The multiport arbiter is configured to: receive the access request sent by the target processing core; determine the indication information of the target processing core based on a port that receives the access request; and send the access request and the indication information of the target processing core to the flash controller.

In a possible implementation, the plurality of storage areas include a first storage area, the first storage area corresponds to a first access condition, and the first access condition includes that the processing core indicated by the indication information in the access information is a security subsystem.

In a possible implementation, the plurality of storage areas include a second storage area, the second storage area corresponds to a second access condition, and the second access condition includes that the access occasion in the access information is an occasion before an operating system OS is loaded.

In a possible implementation, the plurality of storage areas include a third storage area, the third storage area corresponds to a third access condition, and the third access condition includes that the processing core indicated by the indication information in the access information is any one of the security subsystem, a management subsystem, and an application processor in a secure state.

In a possible implementation, the plurality of storage areas include a fourth storage area, the fourth storage area corresponds to a fourth access condition, and the fourth access condition includes that the processing core indicated by the indication information in the access information is any one of the plurality of processing cores.

In a possible implementation, the access request further carries operation type indication information, and before obtaining the access information corresponding to the access request, the flash controller is further configured to:
determine that an operation type indicated by the operation type indication information is a read operation or a write operation.

In a possible implementation, the flash controller is further configured to:
execute the access request when determining that the operation type indicated by the operation type indication information is not the read operation or the write operation.

According to a third aspect, an electronic device is provided, where the electronic device includes the SoC and the flash memory according to the second aspect.

### BRIEF DESCRIPTION OF DRAWINGS

FIG. 1 is a diagram of a structure of an SoC according to an embodiment of this disclosure;
FIG. 2 is a schematic flowchart of a data access method according to an embodiment of this disclosure;
FIG. 3 is a diagram of a structure of an SoC according to an embodiment of this disclosure;
FIG. 4 is a diagram of a structure of an SoC according to an embodiment of this disclosure; and
FIG. 5 is a diagram of a structure of a chip system according to an embodiment of this disclosure.

### DESCRIPTION OF EMBODIMENTS

To make the objectives, technical solutions, and advantages of this disclosure clearer, the following further describes the implementations of this disclosure in detail with reference to the accompanying drawings.

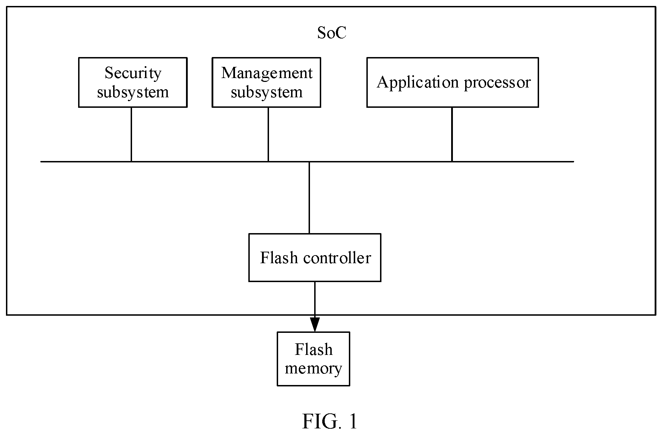

An embodiment of this disclosure provides a data access method, and the method may be applied to a system on chip (System on Chip, SoC). The SoC may be a chip in an electronic device like a base station, a router, a server, a desktop computer, or a notebook computer. FIG. 1 is a diagram of a structure of an SoC. The SoC includes a plurality of processing cores, such as a security subsystem (Security module), a management subsystem (Management module), and an application processor (Application CPU). The security subsystem is configured to process system security-related transactions, the management subsystem is configured to manage a system status, and the application processor is configured to run an operating system (Operating System, OS) and an application. The application processor is also referred to as a service core. When running, the application processor may be in a secure state or an insecure state.

The SoC further includes a flash controller (Flash Controller), and the flash controller is connected to a flash memory (flash memory). System firmware, such as security subsystem firmware (Security module firmware, sm firmware), management subsystem firmware (Management module firmware, mm firmware), and a basic input/output system (Basic Input/Output System, BIOS), is stored in the flash memory. The security subsystem firmware is run by the security subsystem and is used to provide a system security function. The management subsystem firmware is run by the management subsystem and is used to provide a system management function. The BIOS is run by the application processor and is used to initialize the system and start the OS.

In addition, the SoC may further include a memory controller (DDR controller) and a hard disk controller (SATA controller). The DDR controller is connected to a DDR, the SATA controller is connected to a serial advanced technology attachment hard disk (Serial Advanced Technology Attachment hard disk), and the serial advanced technology attachment hard disk may also be referred to as a SATA hard disk for short. The DDR is used to provide system memory, and the SATA hard disk is configured to store the operating system and the like.

Because system firmware with different system permissions is stored in the flash memory, in an OS running phase, if the OS is attacked or has a security vulnerability, a malicious program may access the flash memory and tamper with the system firmware stored in the flash memory. As a result, the OS cannot run normally or a serious security vulnerability occurs.

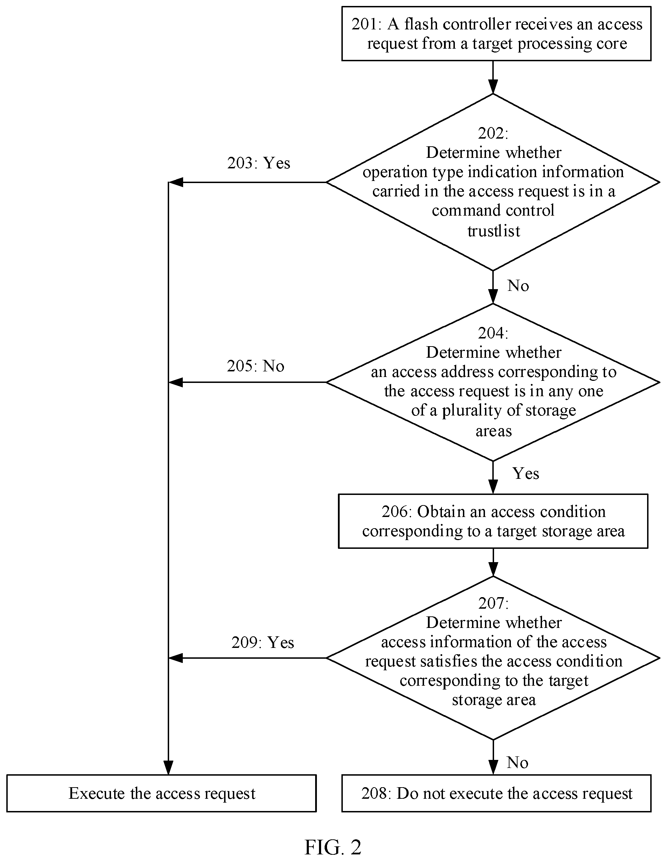

An embodiment of this disclosure provides a data access method. The method is implemented by an SoC. In the method, a flash memory is divided into a plurality of storage areas, and different storage areas may correspond to different access conditions. At least one of a visitor and an access occasion is restricted based on an access condition, so as to implement differentiated security management on different storage areas. The method is described below with reference to the accompanying drawing. Refer to FIG. 2. The method may include the following steps.

Step 201: A flash controller receives an access request from a target processing core.

The target processing core is any processing core in the SoC, for example, any one of a security subsystem, a management subsystem, or an application processor.

Step 202: The flash controller determines whether operation type indication information carried in the access request is in a command control trustlist.

In an implementation, for an operation other than a read operation or a write operation, system firmware is not modified or read. In this case, operation type indication information of these operations may be added to the command control trustlist. For example, for operations such as querying a flash memory model, setting a flash memory operation mode, and performing flash memory quality inspection, operation type indication information corresponding to these operations may be added to the command control trustlist.

After receiving the access request, the flash controller may read the operation type indication information in the access request, and determine whether the operation type indication information is in the command control trustlist.

Step 203: If the operation type indication information carried in the access request is in the command control trustlist, the flash controller executes the access request.

In an implementation, if the flash controller determines that the operation type indication information carried in the access request is in the command control trustlist, the flash controller performs an operation indicated by the operation type indication information in the access request.

Step 204: If the operation type indication information carried in the access request is not in the command control trustlist, determine whether an access address corresponding to the access request is in any one of the plurality of storage areas.

In an implementation, to protect data such as system firmware stored in the flash memory at different security levels, the plurality of storage areas may be obtained by dividing the flash memory, and different storage areas correspond to different security levels. Data that needs to be protected, such as the system firmware stored in the flash memory, is stored in the plurality of storage areas based on a required security level. For example, four storage areas may be obtained by dividing the flash memory, and each storage area may be a continuous storage area, or may include a plurality of discontinuous sub-storage spaces.

When the operation type indication information carried in the access request is not in the command control trustlist, the flash controller may obtain an address range of each of the plurality of storage areas, and then determine whether the access address corresponding to the access request is within an address range of any storage area.

The following describes how the flash controller obtains the address range of each of the plurality of storage areas.

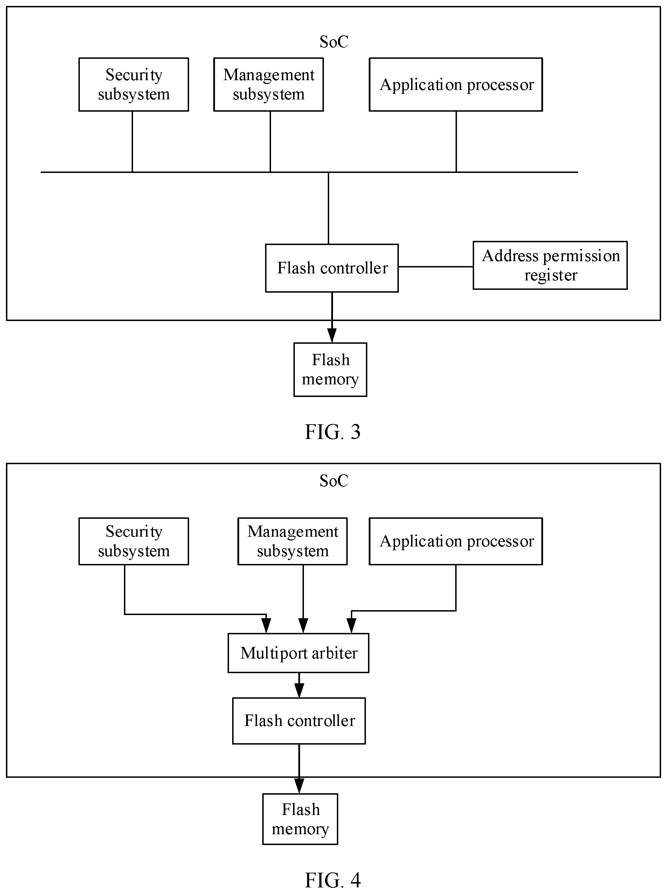

Refer to FIG. 3. In embodiments of this disclosure, an address permission register may be configured in the SoC, and the address range of each storage space is stored in the address permission register. For each storage area, if the storage area is a continuous storage area, the address range of the storage area indicates a start address of the storage area and a size of the storage area. If the storage area includes a plurality of discontinuous sub-storage areas, the address range of the storage area indicates a start address of each sub-storage area in the storage area and a size of the sub-storage area.

In addition, a start address in the address range may be a relative address in the flash memory, and the relative address in the flash memory may also be referred to as an offset address in the flash memory. After the access address carried in the access request is obtained, the access address may be first converted into a relative address in the flash memory, and then whether the access address is in any storage area is determined based on the address range of each storage area.

Step 205: If the access address corresponding to the access request is not in any one of the plurality of storage areas, the flash controller executes the access request.

In an implementation, if the flash controller determines that the access address corresponding to the access request is not in any one of the plurality of storage areas, the flash controller performs an operation indicated by the operation type indication information in the access request.

Step 206: If the access address corresponding to the access request is in a target storage area in the plurality of storage areas, the flash controller obtains an access condition corresponding to the target storage area.

In an implementation, an access condition corresponding to each storage area is further stored in the address permission register. The access condition is used to restrict at least one of a visitor and an access occasion. The following describes the access condition by using an example.

For example, as shown in the following Table 1, the flash memory includes four storage areas, which are respectively denoted as a secure area, a boot area, a critical area, and a common area. An access condition corresponding to the secure area is: accessible only by the security subsystem. An access condition corresponding to the boot area is: accessible only before the OS is loaded. An access condition corresponding to the critical area is: accessible only by the security subsystem, the management subsystem, and the application processor in the secure state. An access condition corresponding to the common area is: accessible by all processing cores in the SoC. Herein, all the processing cores include the security subsystem, the management subsystem, the application processor in the secure state, and an application processor in an insecure state.

**Table 1**

| Storage area | Access condition |
|---|---|
| Secure area | Accessible only by the security subsystem |
| Boot area | Accessible only before the OS is loaded |
| Critical area | Accessible only by the security subsystem, the management subsystem, and the application processor in the secure state |
| Common area | Accessible by all processing cores in the SoC |

When determining that the access address corresponding to the access request is in the target storage area, the flash controller reads, from the address permission register, the access condition corresponding to the target storage area.

Step 207: The flash controller determines whether access information of the access request satisfies the access condition corresponding to the target storage area.

In an implementation, the flash controller may obtain the access information of the access request, where the access information includes indication information of the target processing core and an access occasion. The following separately describes the indication information of the target processing core and the access occasion.

### Indication information for the target processing core:

The indication information of the target processing core indicates the target processing core sending access. For example, first indication information indicates that the target processing core is the security subsystem, second indication information indicates that the target processing core is the management subsystem, third indication information indicates that the target processing core is the application processor in the secure state, and fourth indication information indicates the application processor in the insecure state. Because a malicious program runs on the application processor in the insecure state, for the application processor, the application processor in the secure state and the application processor in the insecure state may be used as two different visitors, and are identified based on two pieces of different indication information.

There may be a plurality of methods for obtaining the indication information of the target processor. The following describes two methods by using examples.

### Method 1:

The indication information of the target processing core is carried in the access request. Correspondingly, after receiving the access request, the flash controller may obtain the indication information of the target processing core carried in the access request.

### Method 2:

Refer to FIG. 4. In embodiments of this disclosure, the SoC may further include a multiport arbiter (Mutiport arbiter), and the multiport arbiter is separately connected to the flash controller and the plurality of processing cores. When the target processing core sends the access request to the flash controller, the multiport arbiter first receives the access request, and determines the indication information of the target processing core based on a port (port) that receives the access request. Specifically, if the access request is received through a first port, it is determined that the indication information of the target processing core is the first indication information, for example, port0, where the first indication information indicates that the target processing core that sends the access request is the security subsystem. If the access request is received through a second port (port), it is determined that the indication information of the target processing core is the second indication information, for example, port1, where the second indication information indicates that the target processing core that sends the access request is the management subsystem. If the access request is received through a third port, and a first status identifier sent by the application processor is received, it is determined that the indication information of the target processing core is the third indication information, for example, port2, where the first status identifier indicates that a running status of the application processor is the secure state, and the third indication information indicates that the target processing core that sends the access request is the application processor in the secure state. If the access request is received through the third port, and a second status identifier sent by the application processor is received, it is determined that the indication information of the target processing core is the fourth indication information, for example, port3, where the second status identifier indicates that the running status of the application processor is the insecure state, and the fourth indication information indicates that the target processing core that sends the access request is the application processor in the insecure state.

After determining the indication information of the target processing core, the multiport arbiter sends the access request and the indication information of the target processing core to the flash controller. Correspondingly, the flash controller may receive the access request and the indication information of the target processing core.

For the access occasion, descriptions are provided below.

When receiving the access request, the flash controller determines whether current time is an occasion before the OS is loaded or an occasion after the OS is loaded, where the occasion before the OS is loaded and the occasion after the OS is loaded are two access occasions. The occasion after the OS is loaded indicates an occasion in a running process of the OS.

The following uses the storage areas and the corresponding access conditions shown in Table 1 as an example to describe how to determine whether the access information of the access request satisfies the access condition corresponding to the target storage area.

If the target storage area is a secure area, and the corresponding access condition is that only the security subsystem can access the target storage area, the flash controller determines whether the indication information of the target processing core is indication information indicating the security subsystem. If the indication information of the target processing core is the first indication information indicating the security subsystem, it is determined that the access information of the access request satisfies the access condition corresponding to the target storage area. If the indication information of the target processing core is not the indication information indicating the security subsystem, it is determined that the access information of the access request does not satisfy the access condition corresponding to the target storage area.

If the target storage area is the boot area, and the corresponding access condition is that access can be performed only before the OS is loaded, the flash controller determines whether the access occasion is an occasion before the OS is loaded. If the access occasion is the occasion before the OS is loaded, it is determined that the access information of the access request satisfies the access condition corresponding to the target storage area. If the access occasion is not the occasion before the OS is loaded, it is determined that the access information of the access request does not satisfy the access condition corresponding to the target storage area.

If the target storage area is the critical area, and the corresponding access condition is that only the security subsystem, the management subsystem, and the application processor in the secure state can access the target storage area, the flash controller determines whether the indication information of the target processing core is any one of the first indication information indicating the security subsystem, the second indication information indicating the management subsystem, or the third indication information indicating the application processor in the secure state. If the indication information of the target processing core is any one of the first indication information indicating the security subsystem, the second indication information indicating the management subsystem, or the third indication information indicating the application processor in the secure state, it is determined that the access information of the access request satisfies the access condition corresponding to the target storage area. If the indication information of the target processing core is not any one of the first indication information indicating the security subsystem, the second indication information indicating the management subsystem, or the third indication information indicating the application processor in the secure state, it is determined that the access information of the access request does not satisfy the access condition corresponding to the target storage area.

If the target storage area is the common area, and the corresponding access condition is that all processing cores in the SoC can access the target storage area, the flash controller determines that the access information of the access request satisfies the access condition corresponding to the target storage area.

Step 208: If it is determined that the access information of the access request does not satisfy the access condition corresponding to the target storage area, the flash controller does not execute the access request.

Step 209: If it is determined that the access information of the access request satisfies the access condition corresponding to the target storage area, the flash controller executes the access request.

In an implementation, if the flash controller determines that the access information of the access request satisfies the access condition corresponding to the target storage area, the flash controller performs an operation indicated by the operation type indication information in the access request.

In a possible implementation, security subsystem firmware may be stored in the secure area, a BIOS (when the BIOS supports restart and update) may be stored in the boot area, management subsystem firmware may be stored in the critical area, and configuration data of the system firmware may be stored in the common area. The configuration data may be information that does not affect system running even if the configuration data is attacked.

In another possible implementation, when the BIOS does not support restart and update, the BIOS may be stored in the critical area, and the BIOS is updated and upgraded by the security subsystem, the management subsystem, or the application processor in the secure state.

In a possible implementation, for the command control trustlist mentioned above, a command control list may alternatively be used, and the command control list may include read operation indication information and write operation indication information. Correspondingly, step 202 may be replaced with the following: The flash controller determines whether the operation type indication information carried in the access request is in the command control list.

Step 203 may be replaced with the following: If the operation type indication information carried in the access request is not in the command control list, the flash controller executes the access request.

Step 204 may be replaced with the following: If the operation type indication information carried in the access request is in the command control list, determine whether an access address corresponding to the access request is in any one of the plurality of storage areas.

With reference to the storage areas and the corresponding access conditions shown in Table 1, the following describes execution of the data access method provided in embodiments of this disclosure in a scenario in which the malicious program is to tamper with the system firmware stored in the flash memory and in a scenario in which the system firmware is normally upgraded.

Scenario 1: The malicious program is to tamper with the system firmware stored in the flash memory. In this scenario, the data access method provided in embodiments of this disclosure may have the following processing procedure.

Step 301: The flash controller receives an access request from an application processor in an insecure state.

In an implementation, the malicious program may hijack the OS to send an access request to the flash memory, where the access request carries write operation indication information and an access address, and the access address is a storage address of the system firmware in the flash memory. The system firmware may be security subsystem firmware, management subsystem firmware, a BIOS, or the like.

In this case, the application processor in the insecure state sends the access request to the flash controller.

Step 302: The flash controller determines whether write operation indication information carried in the access request is in the command control trustlist.

Step 303: If the flash controller determines that the write operation indication information is not in the command control trustlist, the flash controller determines whether the access address corresponding to the access request is in any one of the plurality of storage areas.

Step 304: The flash controller determines that the write operation indication information is in the secure area, and obtains the access condition corresponding to the secure area.

Step 305: If the flash controller determines that access information of the access request does not satisfy the access condition corresponding to the secure area, the flash controller does not execute the access request.

In an implementation, the access condition corresponding to the secure area is that only the security subsystem can access the secure area. The flash controller determines that indication information of a processing core that sends the access request is indication information of the application processor in the insecure state. Further, it may be determined that the access information of the access request does not satisfy the access condition corresponding to the secure area, and the access request is not executed. In this way, a tampering attack of the malicious program on the system firmware can be effectively prevented.

Scenario 2: The system firmware is normally upgraded. In this scenario, the data access method provided in embodiments of this disclosure may have the following processing procedure.

Step 401: The flash controller receives an access request from the security subsystem.

In an implementation, when the OS needs to update the system firmware, the OS may invoke a security subsystem firmware upgrade interface to send upgrade data to the security subsystem. The security subsystem uses a public key to verify the integrity of the upgrade data. If the verification succeeds, the access request is sent to the flash controller. The access request carries an access address, and the access address is a storage address of the system firmware in the flash memory. The system firmware may be security subsystem firmware, management subsystem firmware, a BIOS, or the like.

Step 402: The flash controller determines whether write operation indication information carried in the access request is in the command control trustlist.

Step 403: If the flash controller determines that the write operation indication information is not in the command control trustlist, the flash controller determines whether the access address corresponding to the access request is in any one of the plurality of storage areas.

Step 404: The flash controller determines that the write operation indication information is in the secure area, and obtains the access condition corresponding to the secure area.

Step 405: If the flash controller determines that access information of the access request satisfies the access condition corresponding to the secure area, the flash controller executes the access request.

In an implementation, the access condition corresponding to the secure area is that only the security subsystem can access the secure area. The flash controller determines that indication information of a processing core that sends the access request is the indication information of the security subsystem. Further, it may be determined that the access information of the access request satisfies the access condition corresponding to the secure area, and the access request is executed. In this way, the system firmware can be normally upgraded.

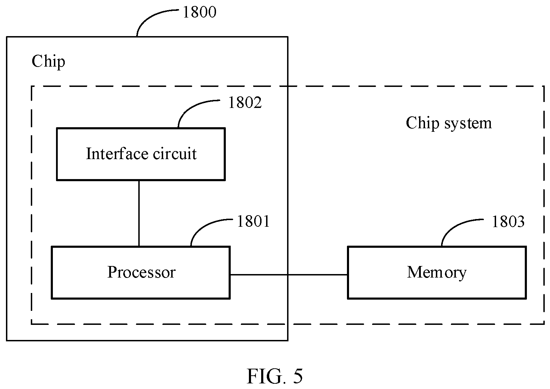

FIG. 5 is a diagram of a structure of a chip system according to this disclosure. As shown in FIG. 5, the chip 1800 includes a processor 1801 and an interface circuit 1802. The interface circuit 1802 is configured to receive instructions and transmit the instructions to the processor 1801. The chip 1800 may be the SoC in the foregoing embodiments, and is configured to perform the data access method provided in embodiments of this disclosure. The processor 1801 is coupled to the memory 1803. The memory 1803 may include a flash memory, a memory, a hard disk, or the like.

In a possible implementation, there are at least one processor 1801 in the chip system. It should be understood that, in this disclosure, the processor 1801 may be a CPU or another general-purpose processor. Alternatively, the processor 1801 may be one or more integrated circuits, for example, a digital signal processor (digital signal processor, DSP), an ASIC, a PLD, an FPGA or another programmable logic device, a discrete gate or transistor logic device, or a discrete hardware component. The general-purpose processor may be a microprocessor, any conventional processor, or the like.

In a possible implementation, there may be one or more memories 1803 in the chip system. The memory 1803 may be integrated with the processor 1801, or may be disposed separately from the processor 1801. This is not limited in this disclosure. For example, the memory 1803 and the processor 1801 may be integrated into a same chip. As shown in FIG. 5, the memory 1803 and the processor 1801 may alternatively be separately disposed on different chips. A type of the memory 1803 and a manner of disposing the memory 1803 and the processor 1801 are not specifically limited in this disclosure.

The memory 1803 may include a read-only memory and a random access memory, and provide instructions and data for the processor 1801. The memory 1803 may further include a non-volatile random access memory. Alternatively, the memory 1803 may be a volatile memory, or may include both a volatile memory and a non-volatile memory.

The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

For example, the chip may be an FPGA, an ASIC, an SoC, a CPU, a network processor (network processor, NP), a digital signal processing circuit (digital signal processor, DSP), a micro controller unit (micro controller unit, MCU), a PLD, or another integrated chip.

Finally, it should be noted that the foregoing embodiments are merely intended to describe the technical solutions of this disclosure, rather than to limit this disclosure. Although this disclosure is described in detail with reference to the foregoing embodiments, a person of ordinary skill in the art should understand that modifications to the technical solutions described in the foregoing embodiments or equivalent replacements to some technical features thereof may be made without departing from the scope of protection of the technical solutions of embodiments of this disclosure.

## Claims

1. A data access method, wherein the method is applied to a system on chip SoC, the SoC comprises a flash controller and a plurality of processing cores, a flash memory controlled by the flash controller comprises a plurality of storage areas, and the method comprises:
receiving, by the flash controller, an access request from a target processing core;
obtaining, by the flash controller, access information corresponding to the access request, wherein the access information comprises at least one of indication information of the target processing core and an access occasion;
determining, by the flash controller, a target storage area in which an access address corresponding to the access request is located in the flash memory;
obtaining, by the flash controller, a target access condition corresponding to the target storage area; and
executing, by the flash controller, the access request when the access information satisfies the target access condition.

2. The method according to claim 1, wherein the SoC further comprises an address permission register, the address permission register is configured to store an address range of each of the plurality of storage areas, and determining, by the flash controller, the target storage area in which the access address corresponding to the access request is located in the flash memory comprises:
reading, by the flash controller, the address range of each storage area from the address permission register; and
determining, based on the address range of each storage area, the target storage area in which the access address corresponding to the access request is located in the flash memory.

3. The method according to claim 2, wherein the address permission register is further configured to store an access condition corresponding to each of the plurality of storage areas, and obtaining, by the flash controller, the target access condition corresponding to the target storage area comprises:
reading, by the flash controller from the address permission register, the target access condition corresponding to the target storage area.

4. The method according to any one of claims 1 to 3, wherein the SoC further comprises a multiport arbiter, and the multiport arbiter is separately connected to the flash controller and the plurality of processing cores; and
before receiving, by the flash controller, the access request from the target processing core, the method further comprises:
receiving, by the multiport arbiter, the access request sent by the target processing core;
determining, by the multiport arbiter, the indication information of the target processing core based on a port that receives the access request; and
sending, by the multiport arbiter, the access request and the indication information of the target processing core to the flash controller.

5. The method according to any one of claims 1 to 4, wherein the plurality of storage areas comprise a first storage area, the first storage area corresponds to a first access condition, and the first access condition comprises that the processing core indicated by the indication information in the access information is a security subsystem.

6. The method according to any one of claims 1 to 5, wherein the plurality of storage areas comprise a second storage area, the second storage area corresponds to a second access condition, and the second access condition comprises that the access occasion in the access information is an occasion before an operating system OS is loaded.

7. The method according to any one of claims 1 to 6, wherein the plurality of storage areas comprise a third storage area, the third storage area corresponds to a third access condition, and the third access condition comprises that the processing core indicated by the indication information in the access information is any one of the security subsystem, a management subsystem, and an application processor in a secure state.

8. The method according to any one of claims 1 to 7, wherein the plurality of storage areas comprise a fourth storage area, the fourth storage area corresponds to a fourth access condition, and the fourth access condition comprises that the processing core indicated by the indication information in the access information is any one of the plurality of processing cores.

9. The method according to any one of claims 1 to 8, wherein the access request further carries operation type indication information, and before obtaining, by the flash controller, the access information corresponding to the access request, the method further comprises:
determining, by the flash controller, that an operation type indicated by the operation type indication information is a read operation or a write operation.

10. The method according to claim 9, wherein the method further comprises:
executing, by the flash controller, the access request when determining that the operation type indicated by the operation type indication information is not the read operation or the write operation.

11. A SoC, wherein the SoC comprises a flash controller and a plurality of processing cores, a flash memory controlled by the flash controller comprises a plurality of storage areas, and the flash controller is configured to:
receive an access request from a target processing core;
obtain access information corresponding to the access request, wherein the access information comprises at least one of indication information of the target processing core or an access occasion;
determine a target storage area in which an access address corresponding to the access request is located in the flash memory;
obtain a target access condition corresponding to the target storage area; and
execute the access request when the access information satisfies the target access condition.

12. The SoC according to claim 11, wherein the SoC further comprises an address permission register, and the address permission register is configured to store an address range of each of the plurality of storage areas; and
the flash controller is configured to: read the address range of each storage area from the address permission register, and determine, based on the address range of each storage area, the target storage area in which the access address corresponding to the access request is located in the flash memory.

13. The SoC according to claim 12, wherein the address permission register is further configured to store an access condition corresponding to each of the plurality of storage areas; and
the flash controller is configured to read, from the address permission register, the target access condition corresponding to the target storage area.

14. The SoC according to any one of claims 11 to 13, wherein the SoC further comprises a multiport arbiter, and the multiport arbiter is separately connected to the flash controller and the plurality of processing cores; and
the multiport arbiter is configured to: receive the access request sent by the target processing core; determine the indication information of the target processing core based on a port that receives the access request; and send the access request and the indication information of the target processing core to the flash controller.

15. The SoC according to any one of claims 11 to 14, wherein the plurality of storage areas comprise a first storage area, the first storage area corresponds to a first access condition, and the first access condition comprises that the processing core indicated by the indication information in the access information is a security subsystem.

16. The SoC according to any one of claims 11 to 15, wherein the plurality of storage areas comprise a second storage area, the second storage area corresponds to a second access condition, and the second access condition comprises that the access occasion in the access information is an occasion before an operating system OS is loaded.

17. The SoC according to any one of claims 11 to 16, wherein the plurality of storage areas comprise a third storage area, the third storage area corresponds to a third access condition, and the third access condition comprises that the processing core indicated by the indication information in the access information is any one of the security subsystem, a management subsystem, and an application processor in a secure state.

18. The SoC according to any one of claims 11 to 17, wherein the plurality of storage areas comprise a fourth storage area, the fourth storage area corresponds to a fourth access condition, and the fourth access condition comprises that the processing core indicated by the indication information in the access information is any one of the plurality of processing cores.

19. The SoC according to any one of claims 11 to 18, wherein the access request further carries operation type indication information, and before obtaining the access information corresponding to the access request, the flash controller is further configured to:
determine that an operation type indicated by the operation type indication information is a read operation or a write operation.

20. The SoC according to claim 19, wherein the flash controller is further configured to:
execute the access request when determining that the operation type indicated by the operation type indication information is not the read operation or the write operation.

21. An electronic device, wherein the electronic device comprises the SoC and the flash memory according to any one of claims 11 to 20.
